# EUROPEAN PATENT APPLICATION

(11) **EP 4 694 094 A1**
(43) Date of publication of application: **11.02.2026**
(21) Application number: 24785192.6
(22) Date of filing: 03.04.2024
(51) Int. Cl.: H04L 69/18, H04L 69/22, H04L 47/2483, H04W 28/02

(54) **METHOD AND DEVICE FOR PROCESSING PACKET IN WIRELESS COMMUNICATION SYSTEM**

(30) Priority: 07.04.2023 KR 20230046394
(71) Applicant: Samsung Electronics Co., Ltd., Suwon-si, Gyeonggi-do 16677 (KR)
(72) Inventor: MOON, Younggyoun, Suwon-si, Gyeonggi-do 16677 (KR); KIM, Dongmyung, Suwon-si, Gyeonggi-do 16677 (KR); KIM, Sunghwan, Suwon-si, Gyeonggi-do 16677 (KR); HAN, Yoonseon, Suwon-si, Gyeonggi-do 16677 (KR)
(74) Representative: Nederlandsch Octrooibureau
(86) International application number: PCT/KR2024/004289
(87) International publication number: WO 2024/210487

(57) **Abstract**

The present disclosure relates to a 5G or 6G communication system for supporting a higher data transmission rate beyond a 4G communication system such as LTE. In the 6G communication system, a packet having a session identifier not identified by header parsing may be provided to a first core having the smallest number of active PDU sessions among multiple cores. In the 6G communication system, a packet having a session identifier identified by the header parsing may be provided to a second core associated with an offset value and a length value obtained by the header parsing among the multiple cores.

## Description

### [Technical Field]

The disclosure relates to a method and device for processing packets in a wireless communication system.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In 6G communication systems, data traffic is expected to increase due to diversification of services or devices based on enhanced speeds. Therefore, in 6G communication systems, it is necessary to enhance the processing performance of Protocol Data Units (PDUs) that cause data traffic.

### [Disclosure of Invention]

### [Solution to Problems]

An embodiment of the disclosure provides a device and method for processing packets to realize multi-core scalability.

An embodiment of the disclosure provides a device and method for distributedly processing packets by a plurality of cores considering sessions according to heterogeneous protocols in a wireless communication system.

A method according to an embodiment of the disclosure is a method for a packet processing device to process packets using a plurality of cores in a wireless communication system, comprising receiving a packet according to a heterogeneous protocol, providing the packet to a first core included in the plurality of cores for processing based on a session identifier not being identified in a packet header, and providing the packet to a second core included in the plurality of cores for processing based on the session identifier being identified in the packet header. The first core may have a relatively smaller number of active protocol data unit (PDU) sessions compared to the second core among the plurality of cores, and the second core may be identified by the session identifier among the plurality of cores.

A method according to an embodiment of the disclosure is a method for a packet processing device to process traffic using a plurality of cores in a wireless communication system, comprising identifying received traffic by protocol, obtaining field information for identifying a PDU session by protocol based on header parsing for the traffic, allocating the received traffic to a core associated with the field information in case that a core associated with the field information is identified in a session-level table, and allocating the received traffic to a core having a relatively small number of active PDU sessions among the plurality of cores in case that a core associated with the field information is not identified in the session-level table.

A method according to an embodiment of the disclosure is a method for distributed processing of packets in a wireless communication system, comprising receiving a plurality of packets, and distributedly processing a first packet and a second packet included in the plurality of packets by a plurality of cores corresponding to a multi-core structure. The first packet does not include a session identification field in a header region, the second packet includes a session identification field in a header region, the first packet is processed by a first core having a relatively smaller number of active PDU sessions compared to other cores among the plurality of cores, the second packet is processed by a second core among the plurality of cores, the second core is a core determined by session identification information of the session identification field included in the header region of the second packet among the plurality of cores, and the first packet may be received according to a different protocol from the second packet.

A device according to an embodiment of the disclosure is a device for distributed processing of packets in a wireless communication system, comprising a buffer configured to store a plurality of packets, and at least one packet processing device including a plurality of cores corresponding to a multi-core structure and configured to distributedly process a first packet and a second packet included in the plurality of packets by the plurality of cores, wherein the first packet does not include a session identification field in a header region, the second packet includes a session identification field in a header region, the first packet is processed by a first core having a relatively smaller number of active PDU sessions compared to other cores among the plurality of cores, the second packet is processed by a second core determined by session identification information of the session identification field included in the header region of the second packet among the plurality of cores, and the first packet may be received according to a different protocol from the second packet.

According to an embodiment of the disclosure, packets may be distributedly processed through a plurality of cores considering sessions according to heterogeneous protocols.

### [Brief Description of Drawings]

FIG. 1 illustrates the structure of a wireless communication system according to an embodiment of the disclosure.
FIG. 2 is a signal flow diagram corresponding to a procedure for establishing a PDU session in a wireless communication system according to an embodiment of the disclosure.
FIG. 3 exemplarily illustrates a downlink QoS architecture in a wireless communication system according to an embodiment of the disclosure.
FIG. 4 is a configuration diagram illustrating a packet processing device in a wireless communication system according to an embodiment of the disclosure.
FIG. 5 is a configuration diagram illustrating a packet according to an embodiment of the disclosure.
FIGS. 6 to 8 are example views for distributing packets to multi-cores based on session IDs in a wireless communication system according to an embodiment of the disclosure.
FIG. 9 is a flowchart illustrating operations for distributed processing of packets using multi-cores in a wireless communication system according to an embodiment of the disclosure.
FIG. 10 is a flowchart illustrating operations for distributed processing of packets using multi-cores in a wireless communication system according to an embodiment of the disclosure.
FIG. 11 is a flowchart illustrating operations for distributed processing of packets using multi-cores in a wireless communication system according to an embodiment of the disclosure.
FIG. 12 is a flowchart illustrating operations for distributed processing of packets using multi-cores in a wireless communication system according to an embodiment of the disclosure.
FIG. 13 is a flowchart illustrating operations for distributed processing of packets using multi-cores in a wireless communication system according to an embodiment of the disclosure.
FIG. 14 is a flowchart illustrating a polling process of an inter-load balancer (ILB) according to an embodiment of the disclosure.
FIG. 15 is a flowchart illustrating a subscribing process of an ILB according to an embodiment of the disclosure.
FIG. 16 is a configuration diagram illustrating a network device for distributed processing of packets according to an embodiment of the disclosure.
FIG. 17 is a hierarchical structure for packet processing according to an embodiment of the disclosure.
FIG. 18 is a configuration diagram illustrating a base station according to an embodiment of the disclosure.

Reference may be made to the accompanying drawings in the following description, and specific examples that may be practiced are shown as examples within the drawings. Other examples may be utilized and structural changes may be made without departing from the scope of the various examples.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited by the terms, and such terms may be replaced with other terms denoting objects with equivalent technical concept.

For ease of description, the terms and names defined in the 3rd generation partnership project 5G and NR standards among the current communication standards are used herein. However, the disclosure is not limited by such terms and names and may be likewise applicable to wireless communication systems conforming to other standards.

Wireless communication systems have adopted network slicing technology that provides network resources and network functions as independent slices depending on each service. As network slicing is introduced, isolation of network functions and network resources per slice and independent management may be provided. Thus, network functions of the wireless communication system may be selected and combined depending on services or users and, thus, independent, flexible services may be provided per service or per user. Network slice denotes a network resultant from logically integrating the access network and the core network. The network slice is identified by an identifier called single-network slice selection assistance information (S-NSSAI), and the network operator provides the network slice(s) to the UE to provide a communication service to the UE.

Specifically, in the 5G system, in case that the UE registers in the network, the UE transmits identifier information (i.e., requested S-NSSAIs) about the network slices to be requested to the access and mobility management function (AMF), and the AMF provides information (allowed NSSAI) about the network slice(s) usable by the UE to the UE considering the requested S-NSSAIs and subscriber information. Even when the UE does not provide the information about the slice(s) requested by the UE, the AMF may provide the UE with the allowed NSSAI. in this case, the allowed NSSAI may include information about the slice(s) set as default (i.e., default subscribed S-NSSAIs) among information about default configuration slice(s) (default configured NSSAI) and subscription network slices included in the UE subscriber information.

In case that no network slice may be included in the allowed NSSAI (e.g., in case that the default configured NSSAI and default subscribed S-NSSAI(s) are absent or unavailable), the AMF transmits, to the UE, a network registration reject message including the cause code indicating that registration is rejected due to lack of an available network slice.

Further, in case of intending to include any network slice in the allowed NSSAI of the UE, an admission control (network slice admission control (NSAC)) procedure and an authentication (network slice-specific authentication and authorization (NSSAA)) procedure for the corresponding network slice may be performed.

In the NSAC procedure, whether to allow the network slice may be determined based on the number of UEs currently registered in a particular network slice and the maximum number of registered UEs allowed in that network slice (i.e., whether to include the slice in the allowed NSSAI).

In the NSSAA procedure, an authentication procedure may be performed with an AAA (Authentication, Authorization, And Accounting)-S, which is a server that performs authentication on the network slice through an NSSAA function (NSSAAF) based on the credential information for the UE's network slice. In this case, considering the authentication result, it may be determined whether to allow the network slice (i.e., whether to include the slice in allowed NSSAI may be determined).

In order to transmit/receive data to/from a specific data network (DN) through allowed network slices (allowed NSSAIs), the UE may select one of the allowed network slices, request to generate a packet data unit (PDU) session to a specific data network name (DNN) in the corresponding network slice, and transmit and/or receive data through the generated PDU session. A PDU session includes several traffic flows, and the traffic flows may include two types: guaranteed bitrate quality-of-service flow (GBR QoS flow) and non-GBR QoS flow.

Meanwhile, in a wireless communication system, in case that a congestion circumstance occurs for a network slice (e.g., in case that the number of registered UEs and sessions of a network slice reaches a maximum value, in case that overload occurs in one or more NFs among Network Functions related to the network slice, etc.), for an operational reason (operation and management (OAM)) for a specific network slice, or in case that application slowdown occurs on a network slice, a method is needed to efficiently move traffic using the corresponding network slice to another network slice while ensuring a user does not experience service interruption. A network slice with such a problem is referred to as a network slice to be terminated or a network slice to be changed.

Further, in the disclosure, a base station (BS) is a subject that performs resource allocation to a user equipment (UE), and may be at least one of Gnode B, gNB, Enode B, Enb, Node B, BS, radio access network (RAN), a base station controller, or a node on a network. The base station may be at least one network entity among an integrated access and backhaul - donor (IAB-donor), which is a gNB that provides network access to UE(s) through a network of backhaul and access links in an NR system (hereinafter 5G system), and an IAB-node, which is a RAN node that supports an NR access link to a UE and supports a backhaul link to the IAB-donor or another IAB-node. In the disclosure, the UE may be various wireless communication devices, as well as mobile phones, mobile stations (MSs), cellular phones, smartphones, computers, NB-IoT devices, and sensors.

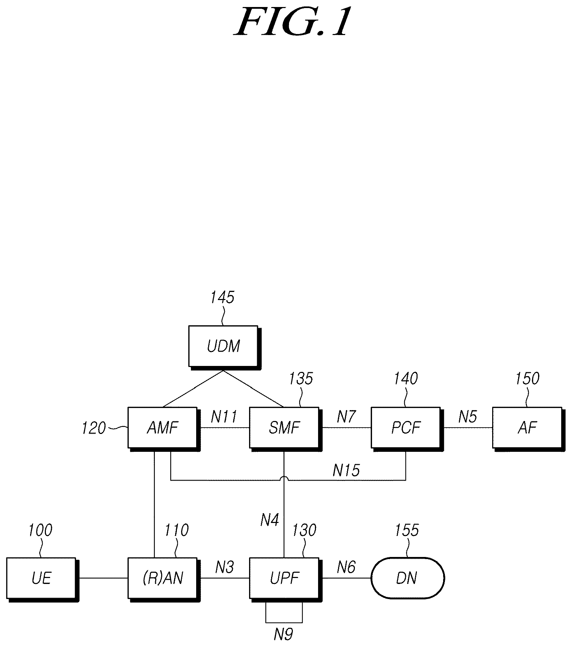

In the disclosure, network technology may refer to a standard specification defined by international telecommunication union (ITU) or 3GPP (e.g., TS 23.501, TS 23.502, TS 23.503, etc.), and a component included in the network structure of FIG. 1 to be described below may mean a physical entity or software performing an individual function or hardware combined with software. In the drawings, a reference numeral illustrated as Nx such as N1, N2, N3, ... represents a known interface between NFs in a 5G core network (5GC).

FIG. 1 illustrates the structure of a wireless communication system according to an embodiment of the disclosure.

Referring to FIG. 1, a wireless communication system may include a core network including a network entity or a network node.

According to an example, the wireless communication system may include a CN, a base station ((radio) access network ((R)AN)) 110, or a user equipment (UE) 100. The CN may be separated into a user plane function or a control plane function.

The user plane function may include a user plane function (UPF) 130. The UPF 130 may serve as a gateway connecting between the (R)AN 110 and an external network (e.g., DN 155). For example, the UPF 130 may perform a function of transferring data between the (R)AN 110 and the DN 155.

The control plane function may include an access and mobility management function (AMF) 120, a session management function (SMF) 135, a policy control function (PCF) 140, a user data management (UDM) 145, an application function (AF) 150, a unified data repository (UDR) (not illustrated), a network exposure function (NEF) (not illustrated), a network repository function (NRF) (not illustrated), an authentication server function (AUSF) (not illustrated), a network slice selection function (NSSF) (not illustrated), or a network slice admission control function (NSACF) (not illustrated). The AMF 120 may manage mobility of the UE 100. The SMF 135 may manage a session. The PCF 140 may provide a policy control function. The UDM 145 may provide a data management function for subscriber data or policy control data. The UDR may store data of various network functions (NFs). The NSSF may select a network slice instance serving the UE 100. The NSACF may monitor and control the number of registered UEs or PDU sessions of a network slice. The AF 150 may provide an application service.

More specifically, the AMF 120 is an entity for managing access and mobility of the UE 100. For example, the AMF 120 may perform a network function such as registration, connection, reachability, mobility management, access verification, authentication, or mobility event generation of the UE 100.

The UPF 130 may perform a data processing function for uplink transmission that transfers data (e.g., uplink PDU) transmitted by the UE 100 to an external network, the DN 155. The UPF 130 may perform a data processing function for downlink transmission that transfers data (e.g., downlink PDU) introduced from the DN 155 to the UE 100. The UPF 130 may serve as an anchor between radio access technologies (RATs). The UPF 130 may perform a network function such as providing connection between a PDU session and the AF 150, packet routing and forwarding, packet inspection, user plane policy application, traffic usage report generation, or buffering.

The SMF 135 may perform a management function for a PDU session of the UE 100. For example, the SMF 135 may perform a session management function such as establishment, modification, or release of a session. The SMF 135 may perform a network function such as internet protocol (IP) address allocation and management for the UE 100, user plane selection or control.

The PCF 140 may manage operator policy information for providing a service in a wireless communication system. The UDM 145 may perform a function such as generation of authentication information for 3GPP security, management of a list of network functions (NFs) supporting the UE 100, and subscription information management.

For example, in a 3GPP system, a conceptual link connecting NFs within a wireless communication system is defined as a reference point. FIG. 1 exemplarily illustrates a reference point included in a wireless communication system as an example of a wireless communication system. Some reference points are omitted in FIG. 1 for convenience of description.
N1: the reference point between the UE 100 and the AMF 120
N2: the reference point between the (R)AN 110, and the AMF 120
N3: the reference point between the (R)AN 110 and the UPF 130
N4: the reference point between the SMF 135 and the UPF 130
N5: the reference point between the PCF 140 and the AF 150
N6: the reference point between the UPF 130 and the DN 155
N7: the reference point between the SMF 135 and the PCF 140
N8: the reference point between the UDM 145 and the AMF 120
N9: the reference point between two core UPFs 130
N10: the reference point between the UDM 145 and the SMF 135
N11: the reference point between the AMF 120 and the SMF 135
N12: Reference point between the AMF 120 and the AUSF
N13: Reference point between the UDM 145 and the AUSF
N14: the reference point between two AMFs 120
N15: Reference point between the PCF 140 and the AMF 120 in a non-roaming scenario, or reference point between the PCF 140 and the AMF 120 in a visited network in a roaming scenario

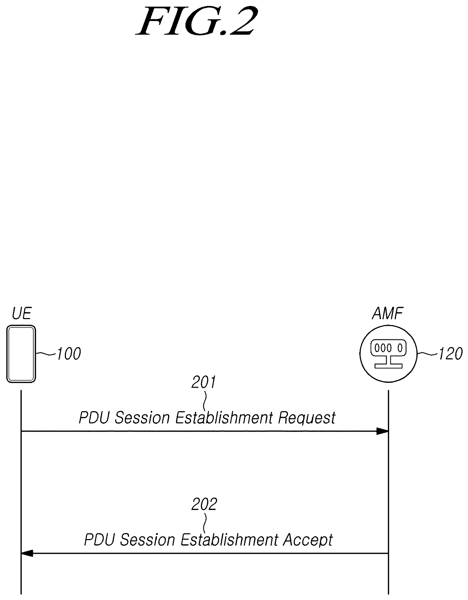

FIG. 2 is a signal flow diagram corresponding to a procedure for establishing a PDU session in a wireless communication system according to an embodiment of the disclosure.

Referring to FIG. 2, in operation 201, the UE 100 may transmit a message for establishing a PDU session. For example, the message may be a PDU session establishment request message. The PDU session establishment request message may include a request type set to, e.g., "Existing PDU Session" or "Initial Request". For example, the message may be an extensible authentication protocol (EPA) message. The EPA message may include, e.g., one or more of data network name (DNN), session network slice selection assistance information (S-NSSAI), or request type. For example, in case that the EPA message includes an identifier (ID) of a PDU session, a network (e.g., access and mobility management function (AMF) 120) may generate a PDU session establishment request message using the identifier (ID) of the PDU session included in the EPA message.

According to an example, the UE 100 may transmit a PDU session establishment request message to a CN through a radio access network (RAN). The RAN (the (R)AN 110 of FIG. 1) may transfer a request message received from the UE 100 to the AMF 120 of the CN.

The AMF 120 may select a network slice in which a PDU session is formed and allocate a unique session ID for the UE 100. The AMF 120 may transmit a request for formation of a PDU session to a session management function (SMF) (the SMF 135 of FIG. 1). The SMF may select an appropriate data network and allocate a network instance ID for the corresponding PDU session. The SMF may transfer a request for setting up a data path of a PDU session to a user plane function (UPF). The UPF may create a data path between the UE 100 and a DN (the DN 155 of FIG. 1).

The UPF (the UPF 130 of FIG. 1) may transmit a response identifying that a data path has been set up to a SMF. The SMF may transmit a response including a PDU session and network instance ID to the AMF 120.

In operation 202, the AMF 120 may transmit a response (PDU session establishment accept) message including a PDU session ID and/or network instance ID to the UE 100. Accordingly, a PDU session is formed, and the UE 100 may transmit or receive data along the data path formed by the UPF.

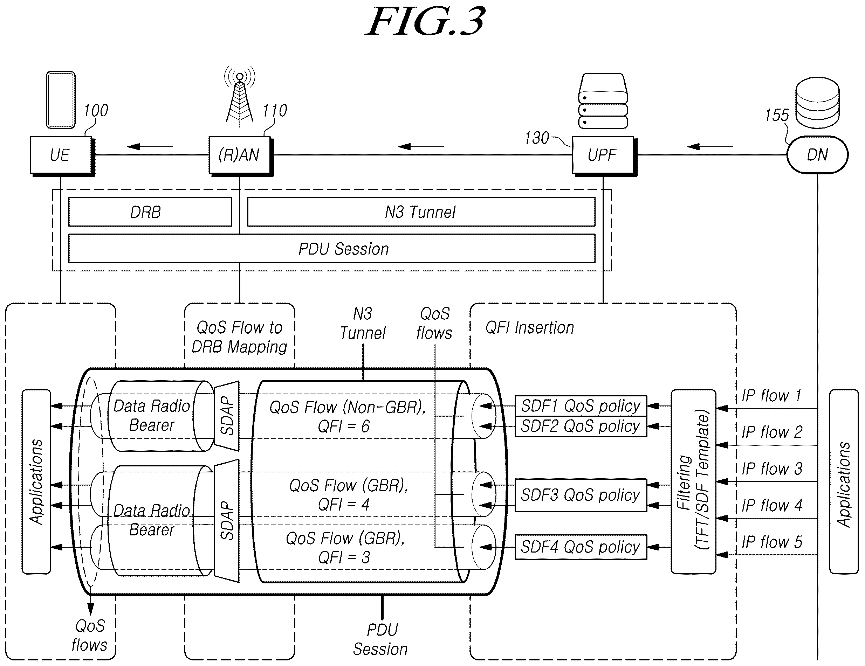

FIG. 3 exemplarily illustrates a downlink QoS architecture in a wireless communication system according to an embodiment of the disclosure.

For example, a 5G QoS model is based on a QoS flow and supports both i) a QoS flow requiring a guaranteed flow bit rate (GFBR QoS flow) and ii) a QoS flow not requiring a guaranteed flow bit rate (non-GBR QoS flow).

Referring to FIG. 3, a base station ((R)AN) 110 may provide a communication path between the UE 100 and the UPF 130 of 5GC. The UPF 130 is responsible for packet routing and forwarding, packet inspection, QoS processing, and external PDU session management for interconnecting a data network in 5G architecture.

To transmit/receive data, the UE 100 may establish one or more PDU sessions with the UPF 130 through the base station 110. For example, one or more PDU sessions may include at least one data radio bearer (DRB) and one or more QoS flows to deliver a data packet for the UE 100.

One or more QoS flows may be identified within one or more PDU sessions by a QoS flow ID (QFI) carried in an encapsulation header of a packet through a N3 general packet radio service tunneling protocol for a user plane (NG-U).

In some cases, a CN may map a packet belonging to a different PDU session to a different DRB. Therefore, the NG-RAN establishes at least one default DRB for each PDU session. Further, a NAS level packet filter of the UE 100 and CN may associate an uplink or downlink packet with a QoS flow. The AS level mapping rule of the UE 100 and NG-RAN may associate an uplink or downlink QoS flow with a DRB. In some cases, the NG-RAN and the CN may ensure QoS (e.g., reliability and target delay) by mapping a packet to an appropriate QoS flow or DRB. Therefore, there may be a two-stage mapping from an internet protocol flow (IP flow) to a QoS flow (e.g., NAS) and from a QoS flow to a DRB (e.g., AS).

At the NAS level, the QoS flow is characterized by a QoS profile provided from CN to NG-RAN and a QoS rule provided from CN to the UE 100. The QoS profile may be used to determine processing for a radio interface in NG-RAN. The QoS rule indicates mapping between uplink user plane traffic and the QoS flow to the UE 100. The QoS flow may be GBR or non-GBR according to a QoS profile. The QoS profile of each QoS flow may include a QoS parameter such as 5G QoS identifier (5QI), allocation and retention priority (ARP). Further, for a GBR QoS flow, the QoS parameter may include guaranteed flow bit rate (GFBR) for both uplink and downlink, maximum flow bit rate (MFBR) for both uplink and downlink, and maximum packet loss rate for both uplink and downlink. Further, for non-GBR QoS, the QoS parameter may include reflective QoS attribute (RQA). RQA, in case of being included, may indicate that some (not necessarily all) traffic delivered in the corresponding QoS flow is subject to application of reflective quality of service (RQoS) at NAS.

In some cases, 5QI may be associated with a specific QoS characteristic that provides a guideline for setting a node-specific parameter for each QoS flow. In some cases, a standardized or pre-configured QoS characteristic may be derived by the UE 100 from 5QI and is not explicitly signaled. In some cases, a signaled QoS characteristic may be included as a portion of a QoS profile and may include, e.g., resource type (e.g., GBR, delay critical GBR, or non-GBR), priority level, packet delay budget, packet error rate, average window, or maximum data burst volume.

At the access stratum (AS) level, the DRB may define packet processing for a Uu interface between the UE 100 and the base station 110 ((R)AN). The DRB provides a packet with the same packet delivery processing. Mapping between the DRB and the QoS flow by NG-RAN (e.g., base station 110) may be based on QFI and an associated QoS profile (e.g., QoS parameter and QoS characteristic).

In uplink, the NG-RAN may control mapping of the QoS flow to the DRB in two ways (e.g., 1) reflective mapping, 2) explicit configuration). In reflective mapping (e.g., RQoS), for each DRB, the UE 100 may monitor QFI of a downlink packet and apply the same mapping in uplink. In other words, for the DRB, the UE 100 may map an uplink packet belonging to the QoS flow corresponding to a PDU session with QFI identified in a downlink packet for the corresponding DRB. For reflective mapping, the NG-RAN may mark a downlink packet through a Uu interface with QFI. In the case of explicit configuration, in addition to reflective mapping, the NG-RAN may configure an uplink QoS flow for DRB mapping by RRC.

In downlink, QFI may be signaled by the base station 110 of NG-RAN through a Uu interface for RQoS. In case that neither the base station 110 of the NG-RAN nor NAS of the UE 100 intends to use reflective mapping for the QoS flow delivered to the DRB, there may be no QFI for the DRB based on a Uu interface.

As described above, a default DRB may be configured for each PDU session. In case that a received uplink packet does not match configured RRC or reflective QFI for DRB mapping, the UE 100 may map the corresponding packet to a default DRB of a PDU session.

Within each PDU session, a method of mapping multiple QoS flows to the DRB may be performed by the base station 110 of the NG-RAN. The base station 110 of the NG-RAN may map a GBR flow and a non-GBR flow or one or more GBR flows to the same DRB. For the QoS flow configured during PDU session establishment, timing for establishing a non-default DRB between the base station 110 of the NG-RAN and the UE 100 may be different from timing in case that a PDU session is established. Establishment of a non-default DRB may be performed by the base station 110 of the NG-RAN.

One of the core tasks of a network is to provide connectivity between the DN 155 and the UE 100. The DN 155 may be internet, IMS, or other data network name (DNN) dedicated to an industry or a factory.

Non-access stratum session management (NAS-SM) establishes or manages a PDU session for user plane connectivity between the UE 100 and a data network. 3GPP specification maintains flexibility in management and design of a session to support various 5G use cases. 3GPP specification supports, e.g., various PDU session protocol types for session management, various options for how to handle a session and service continuity, and a flexible user plane architecture.

The PDU session may include various parameters as follows.

PDU session identifier (PDU session ID): A PDU session ID means an identifier for identifying a PDU session between the UE 100 and CN.

Slice identifier (S-NSSAI): A slice identifier means a network slice in which a PDU session is established.

Data network name (DNN): DNN means the name of a data network to which a PDU session provides connection.

PDU session type: PDU session type defines an end-user protocol that a PDU session delivers. PDU session type may be, e.g., IPv4, IPv6, dual-stack IPv4/IPv6, Ethernet, or unstructured.

Service and session continuity mode (SSC mode): SSC mode indicates longevity of a user plane anchor point of a PDU session regardless of whether it is relocatable.

User plane security information: Indicates whether to activate ciphering and integrity protection user-plane for a PDU session.

Meanwhile, a flow in the disclosure may include, e.g., a user plane flow (UP flow), a control plane flow (CP flow). The user plane flow may include, e.g., a downlink user plane flow, an uplink user plane flow. The control plane flow may include, e.g., a downlink control plane flow, an uplink control plane flow. Meanwhile, a user plane flow may include, e.g., an IP flow. The IP flow is a basic data unit in an IP-based network. Traffic may include one or more IP flows.

FIG. 3 exemplarily illustrates a QoS architecture for supporting packet transmission on downlink, but this may be applied identically or similarly to uplink as well.

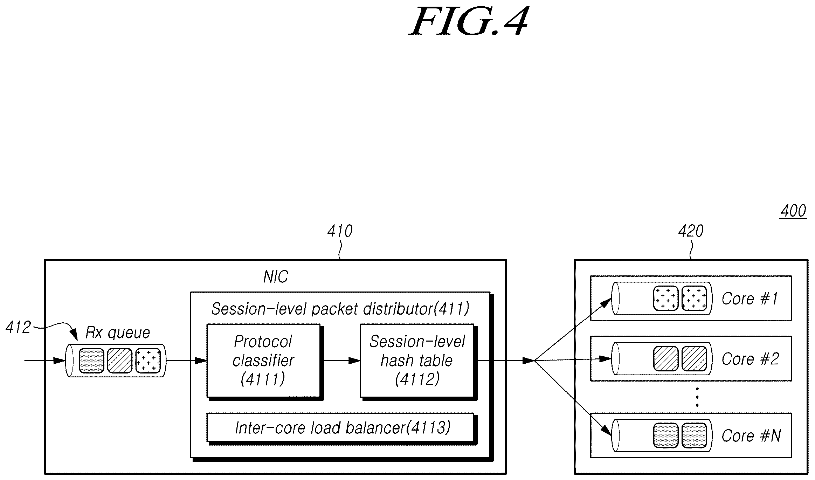

FIG. 4 is a configuration diagram illustrating a packet processing device in a wireless communication system according to an embodiment of the disclosure.

According to an embodiment of the disclosure, a packet processing device 400 may be a server. The server may receive multiple network function tenants that process various types of 3GPP protocols. For example, in case that a packet processing device 400 is a server receiving multiple network function tenants, the packet processing device 400 may efficiently manage a server resource and provide a cost-effective solution to a network user.

Referring to FIG. 4, a packet processing device 400 may obtain one or more packets and operate to distributedly process the acquired packet by a plurality of cores on a PDU session basis.

The packet processing device 400 may determine a core to distribute the packet based on a PDU session of the packet. Each core included in a multi-core structure may be mapped to each PDU session. Accordingly, each core may access a session state variable associated with a mapped PDU session. For example, core #1 mapped to PDU session #1 may access a session state variable of PDU session #1, and core #2 mapped to PDU session #2 may be set to access a session state variable of PDU session #2 but not to access a session state variable of PDU session #1. In other words, core #1 and core #2 will process a packet associated with one or more PDU sessions, but a PDU session of a packet processed by core #1 and a PDU session of a packet processed by core #2 may not match each other. Accordingly, in case that core #1 processes a packet associated with PDU session #1 and PDU session #3, core #2 may be set not to process a packet associated with PDU session #1 and PDU session #3.

The packet processing device 400 may distribute the packet to a core with relatively light load among a plurality of cores in case that there is no core mapped based on a PDU session of the packet or in case that a mapped core may not be identified. The core with relatively light load may be, e.g., a core having a relatively small number of active PDU sessions compared to other cores. The number of active PDU sessions may be used as a requirement for estimating load of the corresponding core.

The packet processing device 400 may include a network interface controller (NIC) 410 or at least one processor 420. The NIC 410 and at least one processor 420 may be configured as one integrated circuit (chip). In this case, the integrated circuit may perform both a function as the NIC 410 and a function as the processor 420.

At least one processor 420 may have a multi-core structure. The processor 420 having a multi-core structure may include a plurality of cores (Core #1, Core #2, ..., Core #N). The plurality of cores (Core #1, Core #2, ..., Core #N) included in the processor 420 may process a packet received by a packet processing device 400. Each of the plurality of cores (Core #1, Core #2, ..., Core #N) may independently perform an operation such as packet processing. At least one processor 420 may be any one of a central processing unit (CPU) or a graphics processing unit (GPU), or a combination thereof. In the following description, one processor is assumed for convenience. However, even when a packet processing device 400 includes a plurality of processors, what is described below may be equally applied to each of the plurality of processors.

In an example, the NIC 410 may include a session-level packet distributor 411. The NIC 410 may distribute a packet stored in a receive queue (Rx queue) 412 to the plurality of cores (Core #1, Core #2, ..., Core #N) through a session-level packet distributor 411. Each of the distributed packet may be processed by any one or at least one of the plurality of cores (Core #1, Core #2, ..., Core #N). Meanwhile, in case of processing a packet based on a multi-core structure, an overload phenomenon may occur in at least some of the plurality of cores (Core #1, Core #2, ..., Core #N).

The session-level packet distributor 411 may allocate a packet to any one of the plurality of cores (Core #1, Core #2, ..., Core #N) based on at least one of a protocol associated with each packet, a session (e.g., PDU session) associated with each packet, or the number of active PDU sessions associated with each core, to prevent overload. For example, the session-level packet distributor 411 may classify a received packet by protocol and allocate it to any one of the plurality of cores (Core #1, Core #2, ..., Core #N). For example, the session-level packet distributor 411 may allocate a received packet to any one of the plurality of cores (Core #1, Core #2, ..., Core #N) based on a session ID associated with each packet. For example, the session-level packet distributor 411 may allocate a received packet to a core having a relatively small number of active PDU sessions compared to other cores among the plurality of cores (Core #1, Core #2, ..., Core #N). As such, by allocating a received packet to any one of the plurality of cores (Core #1, Core #2, ..., Core #N) based on at least one of a protocol associated with each packet, a session (e.g., PDU session) associated with each packet, or the number of active PDU sessions associated with each core, the NIC 410 may prevent overload caused in a multi-core structure. Hereinafter, a detailed configuration of the session-level packet distributor 411 is described in more detail.

The session-level packet distributor 411 may include a protocol classifier 4111. The protocol classifier 4111 may classify a packet by protocol. For example, the protocol classifier 4111 may classify a packet by protocol based on a packet header. The packet may be associated with at least one of a plurality of protocols, and information about an associated protocol may be included in a packet header. Here, information about a protocol may be a protocol identifier, and a protocol identifier may be included in a protocol field.

The protocol classifier 4111 may identify the type of protocol of each packet. In the disclosure, a protocol may include a first protocol including a session identification field and a second protocol not including a session identification field. The first protocol may include, e.g., GTP-u, PFCP. The second protocol may include, e.g., HTTP/2. Meanwhile, a protocol may also include a third protocol for which a session identification field is not identified or may not be identified. In an example, a third protocol may be included in the category of a second protocol. In other words, a second protocol may include those not including a session identification field and those for which a session identification field may not be identified.

The protocol classifier 4111 may perform a different operation according to the type of protocol. In other words, the protocol classifier 4111 may perform a different packet processing operation in case that a protocol of each packet is identified as a first protocol and in case that the protocol is identified as a second protocol.

In case that a first protocol (e.g., GTP-u, PFCP) is identified from a packet header, the protocol classifier 4111 may extract a session identifier (e.g., F-TEID, SEID) of each first protocol or field information (e.g., <offset, length>) of a session identification field. Further, the protocol classifier 4111 may transfer a session identifier or field information to a session-level table 4112.

In case that a second protocol (e.g., HTTP/2) is identified from a packet header or in case that a session identification field may not be identified, the protocol classifier 4111 may allocate a packet to a core having a relatively small number of active PDU sessions among the plurality of cores (Core #1, Core #2, ..., Core #N). For example, in case that a second protocol (e.g., HTTP/2) unrelated to session identification is identified as a result of identifying a protocol of a packet, the protocol classifier 4111 may allocate the packet to a core having a relatively small number of active PDU sessions among the plurality of cores (Core #1, Core #2, ..., Core #N).

As such, as the NIC 410 functionally includes the protocol classifier 4111, it may distribute a packet at a session level even in a cloud environment where a heterogeneous protocol is mixed. Session-level packet distribution is described below.

The NIC 410 may include a session-level table 4112. The session-level table 4112 may be stored in memory of the NIC 410. The session-level table 4112 may be a look-up table. Based on a session-level table 4112, the NIC 410 may perform core mapping that associates a packet with any one of a plurality of cores.

The session-level table 4112 may include information for identifying a core by session (hereinafter referred to as core information). Core information may be a core identifier (e.g., core ID) indicating at least one of a plurality of cores (Core#1, Core#2, ..., Core#N). For example, the NIC 410 may determine that each packet is allocated to any one or at least one of a plurality of cores (Core#1, Core#2, ..., Core#N) based on core information.

Core information may be included in the session-level table 4112 in association with at least one of field information or a session identifier. For example, the session-level table 4112 may include a session identifier and associated core information. For example, the session-level table 4112 may include field information and associated core information. For example, the session-level table 4112 may include a hash value and associated core information. Meanwhile, in case that the session-level table 4112 includes a hash value, the hash value may be determined from field information (specifically, an offset value and a length value).

The NIC 410 may obtain core information associated with the input using input (e.g., a session identifier, field information) transmitted from the protocol classifier 4111 and the session-level table 4112. For example, in case that the session-level table 4112 includes a session identifier and core information, the NIC 410 may identify core information associated with a session identifier based on the session-level table 4112. For example, in case that the session-level table 4112 includes field information and core information, the NIC 410 may identify core information associated with field information based on the session-level table 4112. For example, in case that the session-level table 4112 includes a hash value and core information, the NIC 410 may identify core information associated with a hash value based on the session-level table 4112. According to such functionality, a hash value may be used interchangeably with a session identifier in some embodiments.

Here, a hash value may be obtained through hashing of field information of each session identification field, for example. The hash value may correspond to a session identifier. The hash function used for hashing may include, e.g., consistent hashing, rendezvous hashing, but the disclosure is not limited thereto.

Meanwhile, core information includes information about a core to which a packet including at least one of a specific session identifier or field information of a specific session identification field was previously mapped. In other words, core information may be understood as mapping information that associates a specific PDU session with a specific core. According to core information, a core to which each packet is allocated may be determined for each PDU session.

The case where core information is configured in the session-level table 4112 in association with a session identifier is exemplarily described. In case that packet #1 including session identifier #1 is allocated to core #1, core information #1 associated with session identifier #1 may be added to the session-level table 4112. In case that packet #2 including session identifier #2 is allocated to core #2, core information #2 associated with the session identifier #2 may be added to the session-level table 4112. In case that packet #3 including session identifier #3 is allocated to core #1, core information #1 associated with session identifier #3 may be added to the session-level table 4112. Thereafter, a packet including session identifier #1 may be allocated to core #1 corresponding to the core information #1 based on the session-level table 4112. The packet including session identifier #2 may be allocated to core #2 corresponding to the core information #2 based on the session-identification table 4112. The packet including session identifier #3 may be allocated to core #1 corresponding to the core information #1 based on the session-identification table 4112. As such, core information may be associated with one or more session identifiers. Further, each packet may be classified by session and allocated to a core associated with a session identifier by the session-identification table 4112.

Further, a case where core information is configured in the session-level table 4112 in association with field information (e.g., an offset value, a length value) is exemplarily described. In case that a packet having field information #1 (having offset value #1, length value #1) is allocated to core #1, core information #1 associated with field information #1 may be added to the session-level table 4112. In case that a packet having field information #2 (having offset value #2, length value #2) is allocated to core #2, core information #2 associated with field information #2 may be added to the session-level table 4112. In case that a packet having field information #3 (having offset value #3, length value #3) is allocated to core #1, core information #1 associated with field information #3 may be added to the session-level table 4112. Thereafter, a packet including field information #1 may be allocated to core #1 corresponding to the core information #1 based on the session-level table 4112. The packet including field information #2 may be allocated to core #2 corresponding to the core information #2 based on the session-identification table 4112. The packet including field information #3 may be allocated to core #1 corresponding to the core information #1 based on the session-identification table 4112. As such, core information may be associated with one or more field information. Further, each packet may be classified by session and allocated to a core associated with field information by the session-identification table 4112.

Here, field information may be recorded in the session-level table 4112 in the form of a hash value corresponding to the field information, or may be recorded in the session-level table 4112 together with the hash value. In this case, core information may be associated with one or more hash values. Accordingly, based on a hash value, each packet may be classified by session and allocated to a core associated with a hash value.

As described above, the NIC 410 may identify a core to which a packet having substantially the same session identifier as a session identifier of a current packet was previously allocated using the session-level table 4112. Further, the NIC 410 may identify a core to which a packet having substantially the same field information of a session identification field as field information of a session identification field of a received packet was previously allocated using the session-level table 4112.

In an example, the NIC 410 may obtain a session identifier of a packet based on header parsing for a received packet and identify a core associated with a session identifier using the session-level table 4112. The NIC 410 may allocate a received packet to a core determined based on a core identification result according to the session-level table 4112.

In an example, the NIC 410 may obtain field information of a session identification field of a packet based on header parsing for a received packet. Field information may include an offset value and a length value of a corresponding field. The NIC 410 may identify a core associated with field information using the session-level table 4112. The NIC 410 may allocate a received packet to a core determined based on a core identification result according to the session-level table 4112.

In an example, the NIC 410 may identify a core associated with a hash value obtained from the field information using the session-level table 4112. The NIC 410 may allocate a received packet to a core determined based on a core identification result according to the session-level table 4112.

In case that core information associated with a session identifier, field information of a session identification field, or a hash value is not identified based on the session-level table 4112, the NIC 410 may allocate a packet to a specific core based on the number of active PDU sessions. For example, the NIC 410 may allocate a packet to a core having fewer active PDU sessions than a threshold. The threshold may be preset or updated. For example, the NIC 410 may allocate a packet to a core having the smallest number of active PDU sessions. For example, the NIC 410 may allocate a packet to a core having relatively fewer active PDU sessions among the plurality of cores (Core #1, Core #2, ..., Core #N).

As such, the NIC 410 may effectively manage packet distribution among the plurality of cores (Core #1, Core #2, ..., Core #N) according to the number of active PDU sessions. As described above, by considering not only core information but also the number of active PDU sessions in case of allocating a packet to the plurality of cores (Core #1, Core #2, ..., Core #N), the NIC 410 may support all cores to process a similar number of active PDU sessions.

In an example, the NIC 410 may include a load balancer 4113. The load balancer 4113 may also be referred to as an inter-core load balancer 4113. The load balancer 4113 may be included in a UPF (the UPF 130 of FIG. 1) in an example, but the disclosure is not limited thereto.

The load balancer 4113 may balance load among the plurality of cores (Core #1, Core #2, ..., Core #N). The load balancer 4113 may monitor the number of active PDU sessions associated with each core among the plurality of cores (Core #1, Core #2, ..., Core #N). For example, the load balancer 4113 may dynamically monitor the number of active PDU sessions per core. The load balancer 4113 may monitor or predict the number of active PDU sessions for each core included in a multi-core structure to manage so that no core is overloaded.

In an example, the load balancer 4113 may periodically poll the number of active PDU sessions from a network function instance. In this case, the load balancer 4113 may include a monitoring protocol for calculating the number of active PDU sessions managed by a core.

In an example, the load balancer 4113 may monitor the number of active PDU sessions by subscribing to the number of active PDU sessions through a SMF (the SMF 135 of FIG. 1). For example, the load balancer 4113 may subscribe to the number of active PDU sessions from a SMF. Session group information is transmitted to a SMF and, in case that the number of active PDU sessions associated with session group information changes, a SMF may notify the load balancer 4113.

For reference, a PDU session may include an active PDU session and an inactive PDU session (non-active PDU session or inactive PDU session). The active PDU session means a PDU session currently being used to transmit data, and an inactive PDU session means a PDU session not being used. For example, the inactive PDU session may mean a session that was previously established but is currently not being used for data transmission. The inactive PDU session may be reactivated as needed.

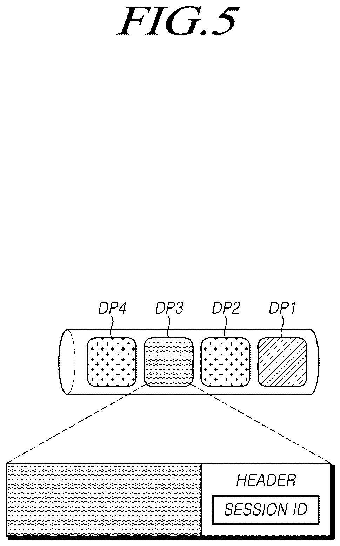

Hereinafter, an operation and a method according to an embodiment of the disclosure supported by a packet processing device (e.g., packet processing device 400 of FIG. 4) and a network interface controller (e.g., NIC 410 of FIG. 4) is described with reference to FIGS. 5 to 15. Meanwhile, in an operation according to various embodiments of the disclosure, a "packet" may be a cause that generates "traffic". Traffic may be used interchangeably with "the number of packets to be processed".

The following operation may be performed by a packet processing device 400 or NIC 410, and each operation may be performed by processing circuitry provided in a packet processing device 400 or NIC 410. Processing circuitry may be included in at least one of a packet processing device 400 or NIC 410. The following description assumes the case of a packet processing device 400, but a description about a packet processing device 400 may also be understood as relating to a NIC 410.

FIG. 5 is a configuration diagram illustrating a packet according to an embodiment of the disclosure..

Referring to FIG. 5, one or more IP flows may include the plurality of packets (DP1, DP2, DP3, DP4). The plurality of packets (DP1, DP2, DP3, DP4) may be stored in a buffer (e.g., receive queue 412 of FIG. 4) of a network interface controller (e.g., NIC 410 of FIG. 4) or memory of a packet processing device (e.g., packet processing device 400 of FIG. 4).

The plurality of packets (DP1, DP2, DP3, DP4) may include, e.g., a first packet (DP1), the second packet (DP2), a third packet (DP3), and the fourth packet (DP4), but the disclosure is not limited thereto. For example, each packet may include a header region where header information is recorded and a payload region where data to be actually transmitted is recorded. The header region may be referred to as a packet header of the corresponding packet.

Each packet may have a packet header of a different structure. For example, the structure of a packet header may be determined by a field included in a packet header. The field may mean an area where header information such as a session identifier, an offset value, or a length value may be recorded. The packet header may have its structure determined by a protocol prepared for delivering a corresponding packet, for example. Therefore, a structure of a packet header may differ by a supported protocol.

In an example, a packet header may include a field for classifying a packet by protocol. The corresponding field may be referred to as a protocol field. The packet may be distinguished from each other according to a protocol field. For example, the plurality of packets (DP1, DP2, DP3, DP4) may be classified as a first type packet associated with a first protocol (e.g., GTP-u, PFCP), a second type packet associated with a second protocol (e.g., HTTP/2) based on a protocol field. Here, the first protocol includes a session identification field, and the second protocol may not include a session identification field.

The packet associated with a first protocol is classified as a first type packet, and a packet associated with a second protocol may be classified as a second type packet. Further, among the plurality of packets (DP1, DP2, DP3, DP4), those for which a session identification field is not identified or may not be identified may also be classified as a third type packet.

In an example, a packet header may include a field for session identification. The corresponding field may be referred to as a session identification field. The session identifier (session ID) may be included or recorded in a session identification field. The session identifier may include, e.g., a PDU session identifier. The PDU session identifier may be the basis for identifying a PDU session associated with each packet. Meanwhile, in case that a session identification field is not present in a packet header, a session identifier may not be included in the corresponding packet header.

Meanwhile, at least some of the plurality of packets (DP1, DP2, DP3, DP4) may be associated with a different session identifier. Although not limited thereto, e.g., a first packet (DP1) may include a first PDU session identifier in a packet header, a second packet (DP2) may include a second PDU session identifier in a packet header, a third packet (DP3) may include a third PDU session identifier in a packet header, and a fourth packet (DP4) may include a fourth PDU session identifier in a packet header.

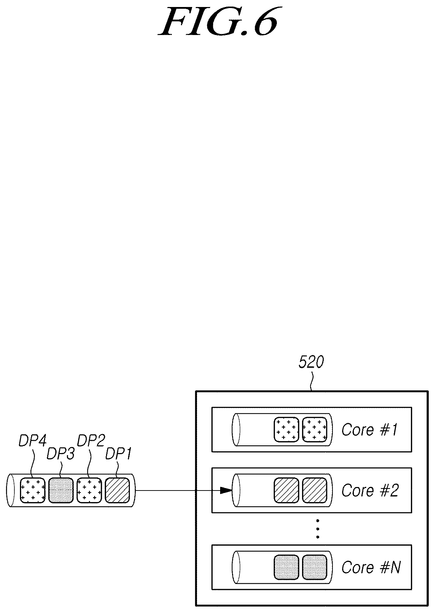

As described above, the first to fourth packets (DP1, DP2, DP3, DP4) may include different PDU session identifiers in packet headers, but are not limited thereto, and some of the plurality of packets (DP1, DP2, DP3, DP4) may have the same PDU session identifier as another packet. For example, according to what is illustrated in FIG. 5, the second packet (DP2) and the fourth packet (DP4) are exemplified as having the same PDU session identifier. The following FIGS. 6 to 8 exemplarily show a process in which each packet is allocated to any one of a plurality of cores based on a PDU session identifier.

Although FIG. 5 does not show all packets (DP1, DP2, DP3, DP4) as including a session identifier in a header region, a packet based on a specific protocol (e.g., HTTP/2) may not include a session identifier in a header region. For example, a packet header may not include a session identification field. For example, the packet header may include a session field, but a session identifier may not be recorded.

FIGS. 6 to 8 are example views for distributing a packet to a multi-core based on a session identifier in a wireless communication system according to an embodiment of the disclosure.

Each of the following operations may be performed by a packet processing device (e.g., packet processing device 400 of FIG. 4), a network interface controller (e.g., NIC 410 of FIG. 4), or a processor 520 (processor 420 of FIG. 4), but the disclosure is not limited thereto.

The Rx queue (e.g., receive queue 412 of FIG. 4) may include the first to fourth packets (DP1, DP2, DP3, DP4). The first packet (DP1) includes a first session identifier, the second packet (DP2) includes a second session identifier, the third packet (DP3) includes a third session identifier, and the fourth packet (DP4) may include a fourth session identifier. Here, it is assumed that a second session identifier and a fourth session identifier are substantially the same, and a remaining session identifier is different from each other.

Referring to FIG. 6, the first packet (DP1) may be allocated to any one of the plurality of cores (Core #1, Core #2, ..., Core #N). The plurality of cores (Core #1, Core #2, ..., Core #N) may be included in one packet processing device or may be divided and included in a plurality of packet processing devices.

According to an example, the first packet (DP1) may be allocated or distributed to a second core (Core #2) among the plurality of cores (Core #1, Core #2, ..., Core #N) based on a first session identifier. The second core (Core #2) may be a core that previously had experience of being allocated and processing a packet including a first session identifier. Core information may be generated based on a packet having a first session identifier being previously allocated to the second core (Core #2). The core information may be generated to be associated with a first session identifier. The NIC may allocate a packet having a first session identifier, like the first packet (DP1), to the second core (Core #2) based on core information.

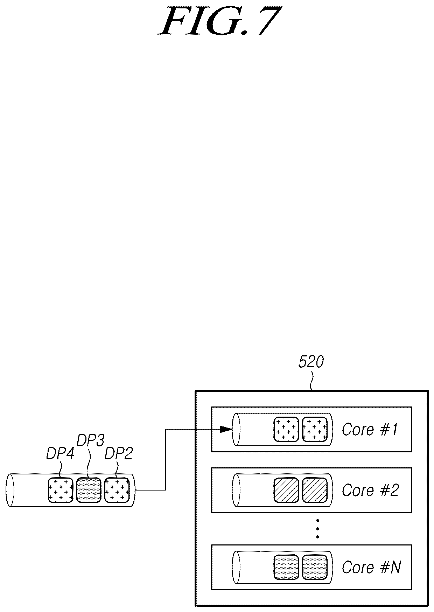

Referring to FIG. 7, the second packet (DP2) may be allocated to any one of the plurality of cores (Core #1, Core #2, ..., Core #N). The second packet (DP2) may be allocated to a first core (Core #1) among the plurality of cores (Core #1, Core #2, ..., Core #N) based on a second session identifier. The first core (Core #1) may be a core to which a packet including a second session identifier was previously allocated. Core information may be generated based on a packet having a second session identifier being previously allocated to the first core (Core #1). Core information may be generated to be associated with a second session identifier. The NIC may allocate a packet having a second session identifier to the first core (Core #1) based on core information.

Further, the first core (Core #1) may be a core having a relatively small number of active PDU sessions. In case that core information associated with a second session identifier is not identified, the NIC may allocate the second packet (DP2) to a core having a relatively small number of active PDU sessions based on the number of active PDU sessions.

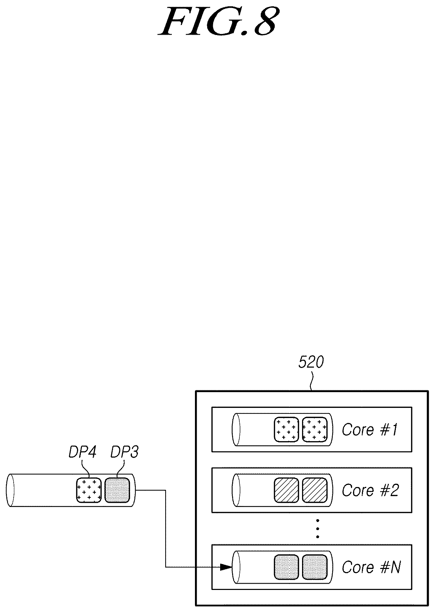

Referring to FIG. 8, the third packet (DP3) may be allocated to any one of the plurality of cores (Core #1, Core #2, ..., Core #N). The third packet (DP3) may be allocated to a Nth core (Core #N) among the plurality of cores (Core #1, Core #2, ..., Core #N) based on a third session identifier. The Nth core (Core #N) may be a core to which a packet including a third session identifier was previously allocated. Core information may be generated based on a packet having a third session identifier being previously allocated to a Nth core (Core #N). Core information may be generated to be associated with a third session identifier. The NIC may allocate a packet having a third session identifier to a Nth core (Core #N) based on core information.

Further, the Nth core (Core #N) may be a core having a relatively small number of active PDU sessions. In case that core information associated with a third session identifier is not identified, the NIC may allocate the third packet (DP3) to a core having a relatively small number of active PDU sessions based on the number of active PDU sessions.

According to an example, the first to fourth packets (DP1, DP2, DP3, DP4) may each be allocated or distributed to any one of the plurality of cores (Core #1, Core #2, ..., Core #N) regardless of a first to fourth session identifier respectively. Here, a core to be allocated or distributed may be a core having a relatively small number of active PDU sessions. Having a relatively small number of active PDU sessions makes it possible to predict that load due to a packet to be processed is relatively low compared to another core. For example, taking the case of the first packet (DP1) for convenience of description, in case that core information associated with a first session identifier is not identified, the NIC may allocate the first packet (DP1) to a core (e.g., second core (Core #2)) having a relatively small number of active PDU sessions based on the number of active PDU sessions. For example, in case that core information does not define a core associated with a first session identifier, associated core information may not be identified. This may mean that a packet including a first session identifier has never been processed by the plurality of cores (Core #1, Core #2, ..., Core #N).

According to an example, a receive queue 412 may also record a packet (hereinafter referred to as a 'fifth packet') that does not include a session identification field in a header region in addition to the first to fourth packets (DP1, DP2, DP3, DP4). The fifth packet may be allocated to a core having a relatively smaller number of active PDU sessions compared to another core among the plurality of cores (Core #1, Core #2, ..., Core #N).

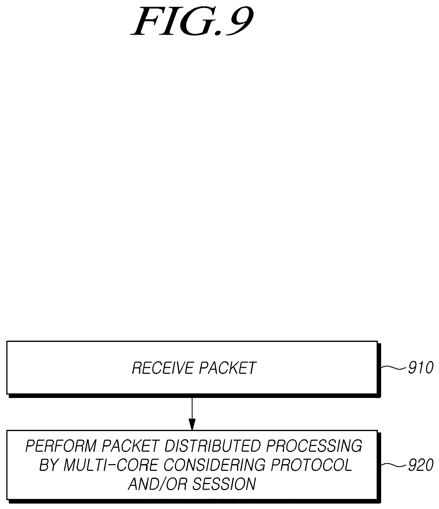

FIG. 9 is a flowchart illustrating an operation for distributed processing of a packet in a wireless communication system according to an embodiment of the disclosure.

Referring to FIG. 9, in operation 910, the packet processing device may receive a plurality of packets through one or more IP flows. The plurality of packets may include, e.g., a first packet, a second packet, and a third packet, but various embodiments of the disclosure are not limited thereto.

In operation 920, the packet processing device may perform packet distributed processing by a multi-core considering a protocol and/or a session. For example, the packet processing device may allocate a packet to any one of a plurality of cores based on a protocol. For example, the packet processing device may allocate a packet to any one of the plurality of cores based on a session. For example, the packet processing device may allocate a packet to any one of the plurality of cores based on a protocol and a session.

According to an example, a session identification field may not be included in a header region of a packet to be processed. Even when it is impossible to identify a session identification field in the header region, it may be determined that a session identification field is not included in a header region. The fact that a session identification field is not included in the header region makes it possible to predict that the corresponding packet was transmitted based on a protocol that does not use a session. The case where it is impossible to identify a session identification field may also include, e.g., a case where a session identifier recorded in a session identification field is not present or a recorded session identifier may not be identified. In this case, the packet processing device may allocate a packet to be processed to a core having a relatively smaller number of active PDU sessions compared to another core among the plurality of cores.

According to an example, a session identification field may be included in a header region of a packet to be processed. The fact that a session identification field is included in a header region makes it possible to predict that the corresponding packet was transmitted based on a protocol supporting a unique session. In this case, the packet processing device may determine a core to which the corresponding packet is allocated among the plurality of cores based on session identification information recorded in a session identification field.

For example, the packet processing device may obtain an offset value and a length value associated with session identification information from a session identification field included in a header region of a packet. Further, the packet processing device may extract a hash value from an offset value and a length value. Here, the hash value may be a session identifier obtained by applying a hash function to an offset value and a length value.

The packet processing device may obtain a core identifier associated with the hash value in a session-level table using the hash value extracted using an offset value and a length value. In this case, the packet processing device may allocate the corresponding packet to a core indicated by a core identifier.

The packet processing device may fail to obtain a core identifier associated with the hash value in a session-level table using the hash value extracted using an offset value and a length value. In this case, the packet processing device may allocate a packet to be processed to a core having a relatively smaller number of active PDU sessions compared to another core among the plurality of cores. For example, the number of active PDU sessions may be identified by periodic polling for a corresponding core or by a change notification of an active PDU session count received from a SMF.

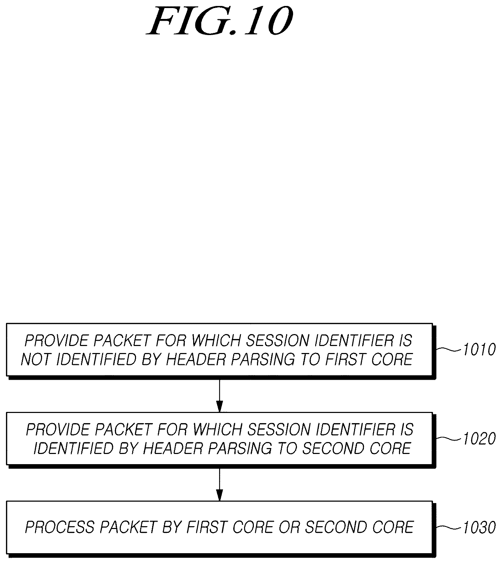

FIG. 10 is a flowchart illustrating operations for distributed processing of packets using multi-cores in a wireless communication system according to an embodiment of the disclosure.

Referring to FIG. 10, in operation 1010, the packet processing device may perform header parsing on a received packet and, in case that a session identifier is not identified by the header parsing, may provide the corresponding packet to a first core. Here, a first core means a core having a relatively smaller number of active PDU sessions among the plurality of cores.

In operation 1020, the packet processing device may perform header parsing on a received packet and provide a packet for which a session identifier is identified by the header parsing to a second core. Here, the second core may be indicated by, e.g., a session identifier or the hash value extracted using an offset value and a length value of a session identification field.

In operation 1030, the packet processing device may distributedly process a received packet through a first core or a second core.

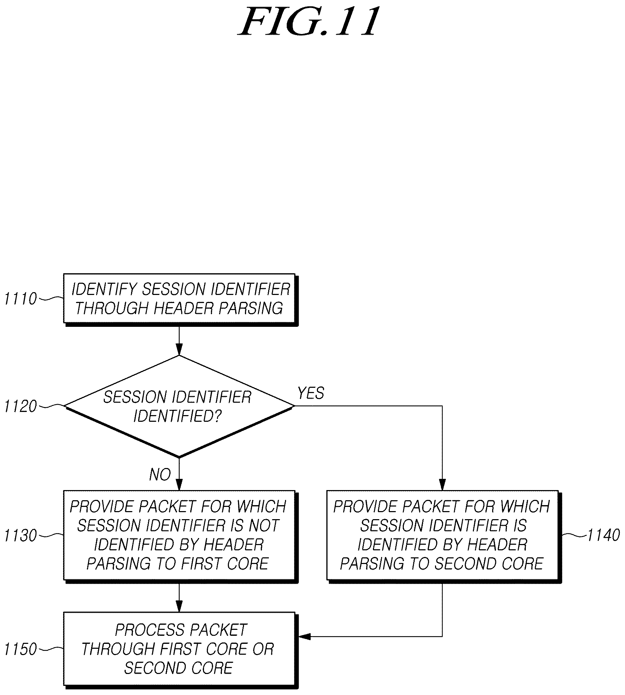

FIG. 11 is a flowchart illustrating operations for distributed processing of packets using multi-cores in a wireless communication system according to an embodiment of the disclosure.

Referring to FIG. 11, in operation 1110, the packet processing device may identify a session identifier through header parsing for a received packet. The session identifier may be included in a specific field in a header of a packet ("packet header"). The session identifier may be identification information for distinguishing a plurality of PDU sessions.

In operation 1120, the packet processing device may identify a session identifier from a packet header. The packet processing device may extract a session identification field from the packet header and obtain a session identifier from the field.

In operation 1130, the packet processing device may provide a received packet to a first core in case that a session identifier is not identified by header parsing. Here, a first core means a core having a relatively smaller number of active PDU sessions among the plurality of cores.

In operation 1140, the packet processing device may provide a packet for which a session identifier is identified by header parsing to a second core. Here, the second core may be indicated by, e.g., a session identifier or the hash value extracted using an offset value and a length value of a session identification field.

In operation 1150, the packet processing device may process a received packet through the first core or a second core.

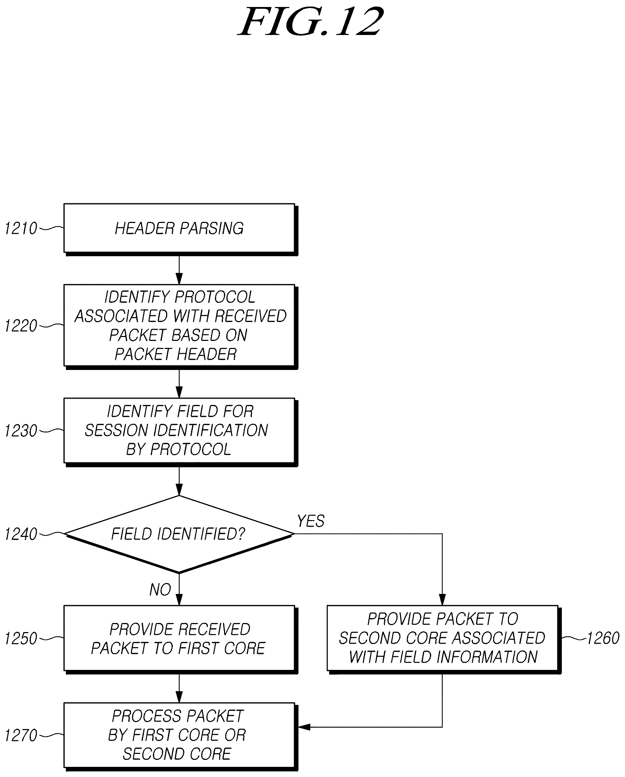

FIG. 12 is a flowchart illustrating operations for distributed processing of packets using multi-cores in a wireless communication system according to an embodiment of the disclosure.

Referring to FIG. 12, in operation 1210, the packet processing device may perform header parsing for a received packet. For example, the packet processing device may extract information included in a header of each packet by performing header parsing on a packet included in a receive queue (Rx queue).

In operation 1220, the packet processing device may identify a protocol associated with a received packet based on a packet header. The received packet may be associated with one of various protocols supported in a wireless communication system. The packet processing device may classify a protocol used for the corresponding packet through header parsing. The packet processing device may identify a protocol applied to the corresponding packet based on, e.g., information about a protocol included in a packet header.

In operation 1230, the packet processing device may determine whether a session identification field is present in the packet header through header parsing. The session identification field may be designated differently by protocol. For example, in the case of a packet based on a first protocol such as GTP-u or PFCP, the packet header may include a session identification field. The session identification field may be designated differently according to a type of first protocol (e.g., GTP-u or PFCP). Further, unlike a first protocol, in the case of a packet based on a second protocol (e.g., HTTP/2), the packet header may not include a session identification field.

In operation 1240, the packet processing device may identify whether a session identification field is included in a packet header. The packet header may include a field associated with any one of a plurality of protocols. The packet header may include a first field associated with a first protocol or a second field associated with a second protocol. The packet processing device may identify a field by protocol.

In an example, the packet processing device may identify whether a session identification field is present by performing parsing on a packet header. For example, in case of identifying that GTP-u was used as a protocol from a packet header, the packet processing device may determine that a session identification field is present in a packet header. For example, in case of identifying that PFCP was used as a protocol from a packet header, the packet processing device may determine that a session identification field is present in a packet header. For example, in case of identifying that HTTP/2 was used as a protocol from a packet header, the packet processing device may determine that a session identification field is not present in a packet header.

In operation 1250, in case that a session identification field is not present in a packet header, the packet processing device may provide the corresponding packet to a first core. Further, in case that a session identification field is not identified in a packet header, the packet processing device may provide the corresponding packet to a first core. The first core means a core having a relatively smaller number of active PDU sessions among the plurality of cores.

In operation 1260, the packet processing device may provide a packet for which a session identifier is identified by header parsing to a second core. Here, the second core may be indicated by, e.g., a session identifier, field information of a session identification field (e.g., an offset value and a length value), or the hash value extracted using field information.

In operation 1270, the packet processing device may process a received packet through the first core or a second core.

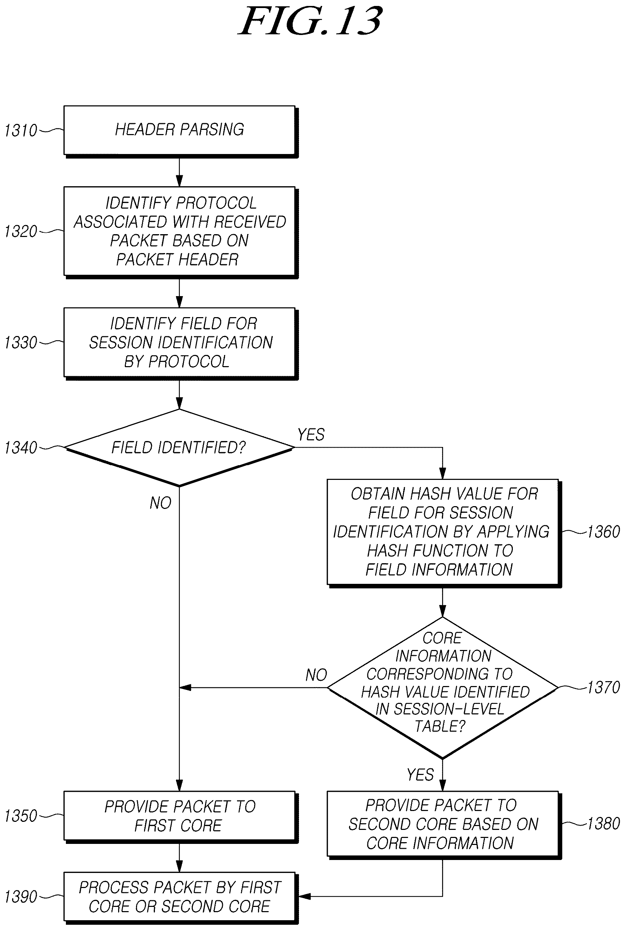

FIG. 13 is a flowchart illustrating operations for distributed processing of packets using multi-cores in a wireless communication system according to an embodiment of the disclosure.

Referring to FIG. 13, in operation 1310, the packet processing device may perform header parsing for a received packet. For example, the packet processing device may extract information included in the packet header by performing header parsing on a packet included in a receive queue (Rx queue). The packet processing device may obtain a session identifier or information about a session identification field from a packet header.

In operation 1320, the packet processing device may identify a protocol associated with a received packet based on a packet header. The received packet may be associated with various protocols. The packet processing device may identify a protocol for each of the received packets from the packet header of each received packet respectively. The packet processing device may identify a received packet by protocol based on information about a protocol included in a packet header. For example, a packet may be classified as a packet(s) including a first protocol or a packet(s) including a second protocol. In this case, a packet of the first protocol includes a session identification field as at least a part, and a packet of the second protocol may be configured not to include a session identification field or to make a session identification field unconfirmable.

In operation 1330, the packet processing device may identify a session identification field. Specifically, the packet processing device may identify a session identification field by protocol. The session identification field may be designated differently by protocol. For example, in the case of the first protocol (e.g., GTP-u and PFCP) including a session identification field, each session identification field may be designated differently. Further, in the case of the second protocol (e.g., HTTP/2), a session identification field may not be included.

In operation 1340, the packet processing device may identify whether a session identification field is included in a packet header. The packet processing device may identify whether a session identification field is present by parsing a packet header. For example, in case that GTP-u is identified as a protocol from a packet header, a session identification field may be identified. For example, in case that PFCP is identified as a protocol from a packet header, a session identification field may be identified. For example, in case that HTTP/2 is identified as a protocol from a packet header, a session identification field may not be identified.

In operation 1350, in case that a session identification field is not identified from a packet header, the packet processing device may provide a received packet to a first core. Here, a first core means a core having a relatively smaller number of active PDU sessions among the plurality of cores. For example, the first core may be a core having the smallest number of active PDU sessions among the plurality of cores. Meanwhile, in case that there are two or more cores having the smallest number of active PDU sessions, the first core may be provided as plural.

In operation 1360, in case that a session identification field is identified, the packet processing device may obtain the hash value using field information (e.g., an offset value and a length value of a session identification field). For example, the hash value may be calculated by applying field information to a hash function. Here, the hash value may be determined by any one of consistent hashing or rendezvous hashing, although not limited thereto.

In operation 1370, the packet processing device may identify whether core information corresponding to the hash value is present in a session-level table. For example, the packet processing device may identify whether core information is mapped corresponding to the hash value in a session-level table. The session-level table may include a plurality of hash values and core information. The hash value and core information may be configured as a pair. Core information is information for identifying a core to which a previously received packet was allocated.

In operation 1350, in case that core information corresponding to the hash value is not present in a session-level table, the packet processing device may provide a received packet to a first core. In other words, even when a session identification field is identified from the packet header (operation 1340, Yes), in case that core information corresponding to the hash value associated with the corresponding field is not present, a received packet may be provided to a first core. As such, the packet processing device may determine a core to which a received packet is allocated considering not only whether a session identification field is present but also whether there is history of being processed by a specific core previously.

In operation 1380, in case that core information corresponding to the hash value is present in a session-level table, the packet processing device may provide a received packet to the second core corresponding to the core information. In an example, the packet processing device may obtain core information corresponding to the hash value using a session-level table and identify the second core using the core information.

More specifically, in case that the packet processing device obtains field information from a session identification field, it may identify a core to which a packet having the corresponding field information was previously allocated using a session-level table. Further, in case that the packet processing device obtains or calculates the hash value from field information, it may identify a core to which a packet having the corresponding field information was previously allocated by obtaining core information recorded in a session-level table in association with a hash value.

In operation 1390, the packet processing device may process a received packet through the first core or a second core.

As such, according to various embodiments of the disclosure described throughout FIGS. 9 to 13, by processing a packet at a session level by the packet processing device, it is possible to prevent the plurality of cores from simultaneously accessing the same session state variable included in a session table. By preventing the plurality of cores from simultaneously accessing the same session state variable included in the session table, it is possible to prevent lock contention and reduce access latency.

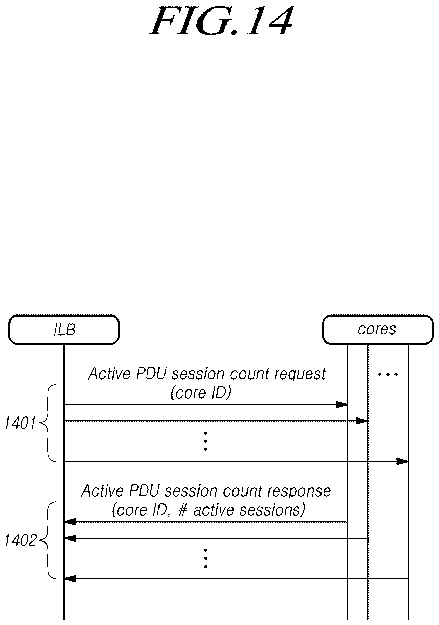

FIG. 14 is a flowchart illustrating a polling process of an inter-load balancer (ILB) according to an embodiment of the disclosure.

The ILB illustrated in FIG. 14 may be understood as a ILB (load balancer 4113 of FIG. 4) included in a network interface controller (NIC 410 of FIG. 4).

In operation 1401, a ILB may transmit an active PDU session count request message to each of the plurality of cores. The active PDU session count request message may include the corresponding core ID. In other words, a ILB may request the number of active PDU sessions for each of the plurality of cores. Each core that receives an active PDU session count request may count the number of PDU sessions and respond the count result to a ILB.

In operation 1402, each of the plurality of cores may transmit an active PDU session count response message to a ILB. The active PDU session count response message may include a core ID of a core transmitting a response. The active PDU session count response message may include the number of active PDU sessions counted by each core.

The ILB may identify the number of active PDU sessions for each of the plurality of cores by receiving an active PDU session count response message.

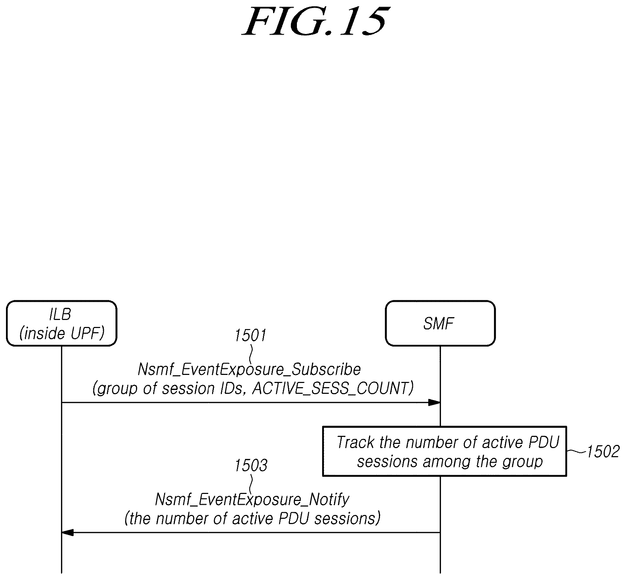

FIG. 15 is a flowchart illustrating a subscribing process of an ILB according to an embodiment of the disclosure.

The ILB illustrated in FIG. 15 may be understood as a ILB (load balancer 4113 of FIG. 4) included in a network interface controller (NIC 410 of FIG. 4). The ILB may be included as at least a portion of a UPF (UPF 130 of FIG. 1).

In operation 1501, a ILB may transmit Nsmf_Eventexposure_Subscribe to a SMF (SMF 135 of FIG. 1). The Nsmf_Eventexposure_Subscribe may be understood as a subscription request message. The Nsmf_Eventexposure_Subscribe may include a group of PDU session identifiers, an active PDU session count request (ACTIVE_SESS_COUNT). The group of session IDs may include a ID of a PDU session to be counted. The count request (ACTIVE_SESS_COUNT) may instruct a SMF to track a PDU session included in the PDU session identifier group.

In operation 1502, an SMF may count the number of active PDU sessions based on the PDU session identifier group. For example, the SMF may count the number of active PDU sessions among a plurality of PDU sessions included in the PDU session identifier group.

In operation 1503, the SMF may transmit Nsmf_Eventexposure_Notify to a ILB in response to Nsmf_Eventexposure_Subscribe. The Nsmf_Eventexposure_notify may include the number of active PDU sessions. For example, the SMF may receive the number of active PDU sessions from each of the plurality of cores. In this case, Nsmf_Eventexposure_notify received from each core may include the number of active PDU sessions being processed by the corresponding core.

The ILB may identify the number of active PDU sessions for each of the plurality of cores by receiving Nsmf_Eventexposure_notify.

Hereinafter, a network device and a base station that may be applied to an embodiment of the disclosure is described.

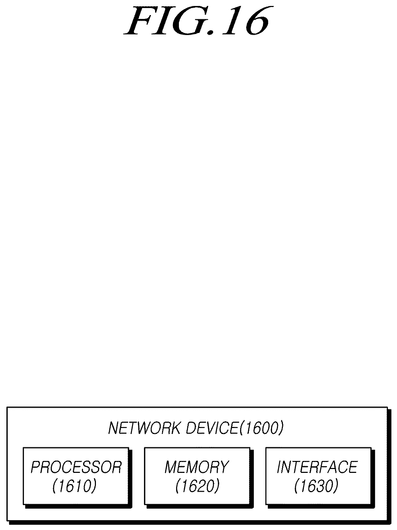

FIG. 16 is a configuration diagram illustrating a network device for distributed processing of packets according to an embodiment of the disclosure.

Referring to FIG. 16, a network device 1600 may include a processor 1610, memory 1620, and an interface 1630.

The processor 1610 may control the overall operation of a network device. For example, the processor 1610 may transmit/receive a signal through an interface 1630. Further, the processor 1610 may record and read data in memory 1620. The processor 1610 may perform a function of a protocol stack required by a communication specification. To that end, the processor 1610 may include at least one processor. The processor 1610 may control a network device to perform an operation according to the above-described embodiment.

Memory 1620 may store data such as a basic program, an application program, and configuration information for operation of a network device. The memory 1620 may be configured as a volatile memory, a non-volatile memory, or a combination of a volatile memory and a non-volatile memory. The memory 1620 may provide the stored data according to a request of the processor 1610.

The interface 1630 may perform a function for transmitting/receiving a signal through a wired channel or a wireless channel. For example, the interface 1630 may perform a conversion function between a baseband signal and a bit string according to a physical layer specification of a system. For example, in case of transmitting data, the interface 1630 may generate a complex symbol by encoding and modulating a transmission bit string. The interface 1630 may convert a bit string to be transmitted to another network device in a network to a physical signal and convert a physical signal received from another network device to a bit string. The interface 1630 may include at least one interface for this purpose.

In various embodiments of the disclosure, a network device may be, e.g., any one of a base station, a UE, a NF, a AMF, a SMF, a UPF, a NEF, a NRF, a CF, a NSSF, a UDM, a AF, a AUSF, a SCP, a UDSF, context storage, a OAM, a EMS, a configuration server, or a ID management server.

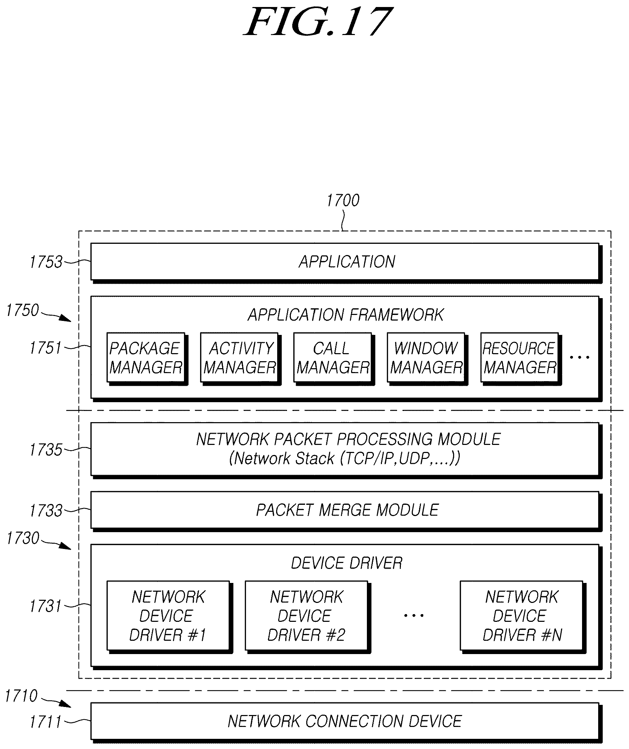

FIG. 17 is a hierarchical structure for packet processing according to an embodiment of the disclosure.

Referring to FIG. 17, an electronic device may include a device region, a kernel region, and a user region for transmitting or receiving a packet (e.g., a data packet).

The device region 1710 may provide operation of a hardware device for transmitting or receiving a packet. The operation in a device region 1710 may be executed by a communication processor or a communication module.

The device region 1710 may include a network connection device 1711 (e.g., a network interface controller or modem). The network connection device 1711 may be a hardware device for converting a packet that an electronic device wants to transmit through a network to a signal or a bit string and physically transmitting or receiving it.

The packet may include a data packet that a transmitting end (or transmitting-side electronic device) wants to transmit to a receiving end (or receiving-side electronic device). In case that a network connection device 1711 is included in a processor and configured as one processing chip, a network connection device 1711 may mean an interface (e.g., inter-processor communication (IPC) interface) that transfers a packet from a communication processor to an application processor.

The network interface controller may also be referred to as a "network interface card" or "network interface circuit".

The kernel region 1730 and a user region 1750 may correspond to a memory address space included in at least a portion of a program. The operation in a kernel region 1730 and a user region 1750 may be executed by a processor (e.g., an application processor). The processor may perform an operation (or function) in a kernel region 1730 and a user region 1750 through software execution. The instruction related to the operation may be stored in memory.

The kernel layer 1730 may be included in an operating system (OS) of an electronic device. The kernel region 1730 may control packet processing. The kernel region 1730 may include various modules to process a received packet. The kernel region 1730 may include at least one of a device driver 1731, a packet merge module 1733, and a network packet processing module 1735.

The device driver 1731 may process a received packet to be processable at an upper layer. The device driver 1731 may process a packet to conform to an operating system running on electronic device 101. The device driver 1731 may include one or at least two network device drivers (network device driver #1, network device driver #2, ..., network device driver #N).

The network device driver may receive a packet according to a communication protocol defined by a manufacturer of a network connection device 1711. The network device driver may include a device driver of a network device (e.g., a modem, a LAN card, Bluetooth, near field communication (NFC), Wi-Fi, a display, audio, video).

The structure may be stored in a buffer for network processing. The buffer may store a structure in the form of a list for packet merging. The operation of processing and storing a packet as a structure may be referred to as packet structuring.

The packet merge module 1733 may perform an operation related to packet merging (e.g., merge, flush, or skip). The packet merge module 1733 may transfer a received packet to an upper layer (e.g., network packet processing module 1735). The packet merge module 1733 may transfer a structured packet received from a device driver 1731 to an upper layer.

The packet merge module 1733 may merge and transfer a received packet. The operation related to packet merging may be a technique for merging (or bundling) consecutive packet data with at least some of the same IP/TCP header information into one packet in case of receiving a packet from a network device driver, and sending a merged packet to a network packet processing module 1735 (e.g., a network stack).

The packet merge module 1733 may reduce load on a network packet processing module 1755 by merging a received packet and transferring it to an upper layer at once. Further, through an operation related to packet merging, the number of responses (e.g., acknowledge, ACK) for a received packet decreases, so load on a network connection device 1711 may be decreased. Alternatively, as overall load within a system decreases, processing efficiency may increase, so throughput (Tput) may rise.

The packet merge module 1733 may also transfer a received packet directly to an upper layer (e.g., transmission control protocol (TCP)/internet protocol (IP)). In case of receiving a notification indicating completion of packet reception or in case that a specific condition is satisfied, a packet merge module 1733 may transfer a received packet directly to an upper layer.

In a packet merge module 1733, an operation of merging a received packet and transferring it to an upper layer or transferring a received packet directly to an upper layer may be referred to as flush. Flush may mean an operation of transferring a structure stored in a buffer of a packet merge module 1733 to an upper layer. The packet merge module 1733 may store a structure in a buffer in a list form to correspond to a stream (e.g., a TCP stream). The packet merge module 1733 may include a packet list corresponding to each stream.

The operation related to packet merging may be referred to as offload or receive offload. The operation related to packet merging may be performed as a function defined in a OS operating in electronic device 101. For example, an operation related to packet merging may include generic receiver offload (GRO) of Linux^{™}. As another example, an operation related to packet merging may be receive segment coalescing (RSC) of Windows^{™}.

In an example, in case that a processor has multiple cores, an operation of the packet merge module 1733 may be performed in parallel in a different processor for each session. For example, the packet received from at least one network connection device 1711 may be transferred to any one core among the plurality of cores. Each of the plurality of cores may independently process a packet received from at least one network connection device 1711. For example, the plurality of cores may process a packet received from at least one network connection device 1711 in parallel.

The network packet processing module 1735 may process a packet received from a packet merge module 1733. The network packet processing module 1735 may include a network stack. The network packet processing module 1735 may include a network layer (e.g., internet protocol (IP), internet control message protocol (ICMP)) and a transport layer (transmission control protocol (TCP), user datagram protocol (UDP)).

The network packet processing module 1735 may receive a packet from a network connection device 1711 through a device driver 1731 and a packet merge module 1733.

The network packet processing module 1735 may process a packet received from the device driver 1731 and packet merge module 1733 to be processable in a user region, then transfer a processed packet to a user region. For example, in an IP layer, a network packet processing module 1735 may perform IP routing. Further, e.g., in a TCP layer, a network packet processing module 1735 may identify a TCP control block. The network packet processing module 1735 may identify an IP and a port number of a corresponding packet.

In a user layer 1750, an operation using a packet transferred from a kernel region 1730 may be performed. In a user layer 1750, a transferred packet may be used to meet a purpose of an application operating at a user layer. For example, a message may be displayed to a user of electronic device 101 or a video streaming service may be provided. The user region 1750 may include an application framework 1751 and an application 1753.

The application 1753 may control a resource related to an electronic device and/or may be operated on an operating system. The operating system may include, e.g., Android^{™}, Linux^{™}, iOS^{™}, Windows^{™}, Symbian^{™}, Tizen^{™}, or Bada^{™},

The application framework 1751 may provide a function commonly needed by an application 1753 or provide various functions to the application 1753 so that the application 1753 may use a limited system resource inside an electronic device. For example, the application framework 1751 may include a package manager, an activity manager, a call manager, a window manager, or a resource manager.

The packet received from a network connection device 1711 may be transferred to a network packet processing module 1735 (e.g., a network stack) through a device driver 1731, which may be implemented in the form of software 1700, via a packet merge module 1733, and the application 1753 may use a packet processed by a network packet processing module 1735 (e.g., a network stack).

The operation related to packet merging provided by a packet merge module 1733 may reduce processing load in a network stack by merging multiple received packets into one and transferring them to a network stack at once. The maximum transmission unit (MTU) may be the maximum transmission unit of a packet that may be transferred to a network layer (e.g., an IP layer of a network stack). In case that an operation related to packet merging is not applied, a network device driver may transfer a packet of a size equal to or smaller than MTU to a network stack. In case that an operation related to packet merging is applied, a size of a packet flushed to a network stack may exceed MTU (e.g., 999 or 64KB (kilobyte)). In case that an operation related to packet merging is applied, load on a network stack of a system decreases and fewer responses (ACKs) for a packet are transmitted to a server side, so load on data transmission hardware such as the NIC or modem and an overall network processor may be decreased. However, in case that a packet merge module 1733 uniformly merges a packet and transfers it to an upper layer, e.g., in case that a network speed is low such as at the beginning of packet transmission, transmission of a response (ACK) for a received packet may be delayed, preventing a network speed from increasing quickly.

The transport protocol such as TCP may increase a window size every time a ACK is received for congestion control. For example, at the beginning of transmission, a window size may be increased exponentially every time a ACK is received until exceeding a threshold. For example, at the beginning of transmission, the faster a response to a transmitted packet is, the faster a network speed may increase. However, in case that fewer responses (ACKs) are transmitted, an increase in network speed becomes slower, which may slow down the time until a first screen starts in case of playing a streaming video. For example, instead of transmitting a ACK for each received packet, in case of transmitting one ACK for multiple merged packets, a transmitting end may increase a window size considering only one ACK. In case of applying an operation related to packet merging, the number of ACK occurrences decreases, so throughput may decrease compared to when an operation related to packet merging is not applied. As a network condition enhances, the number of ACK occurrences increases, so throughput reduction may occur due to an operation related to packet merging.

Throughput may be enhanced by adaptively (or variably) merging a packet based on a characteristic of a session (e.g., an IP type or an application type) corresponding to a received data packet and transferring it to an upper layer, or by transferring a received packet directly to an upper layer. The operation of transferring a packet (e.g., a merged packet) to an upper layer (e.g., a network packet processing module 1735) in the packet merge module 1733 may be referred to as flush.

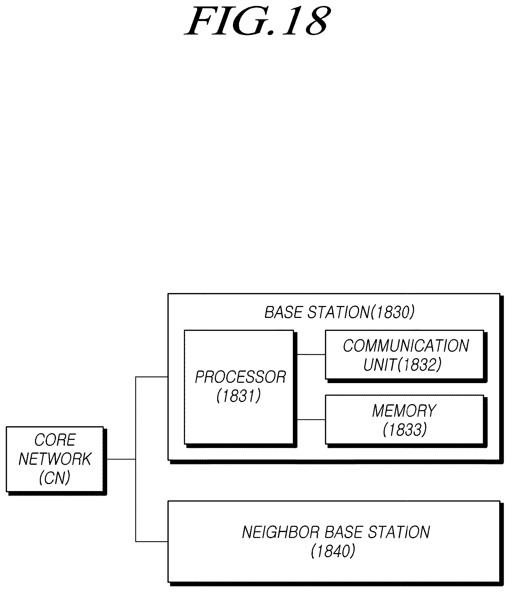

FIG. 18 is a configuration diagram illustrating a base station according to an embodiment of the disclosure.

Referring to FIG. 18, a base station 1830 may include a processor 1831, a communication unit 1832, and memory 1833. However, since all illustrated components are not essential, the base station 1830 may be implemented with more or fewer components than illustrated. Further, the processor 1831, the communication unit 1832, and the memory 1833 may be implemented as a single chip in some cases.

The processor 1831 may include one or more processors or other processing devices that control a disclosed function, process and/or method. The operation of the base station 1830 may be implemented by the processor 1831.

The communication unit 1832 may include a RF transmitter for up-converting and amplifying a transmitted signal and a RF receiver for down-converting a frequency of a received signal. However, according to an example, the communication unit 1832 may be implemented with more or fewer components than illustrated.

The communication unit 1832 may be connected to the processor 1831 to transmit and/or receive a signal. The signal may include control information and data. Further, the communication unit 1832 may receive a signal through a wireless channel and output it to the processor 1831. The communication unit 1832 may transmit a signal output from the processor 1831 through a wireless channel.

The memory 1833 may store control information or data included in a signal obtained by a base station 1830. The memory 1833 may be connected to the processor 1831 and store at least one instruction or a protocol or a parameter for a disclosed function, process and/or method. The memory 1833 may include read-only memory (ROM) and/or random access memory (RAM) and/or a hard disk and/or a CD-ROM and/or a DVD and/or another storage device.

Meanwhile, the base station 1830 may be connected to a core network (CN), and the base station 1830 may be connected to a neighbor base station 1840. For example, an interface between the base stations 18300, 1840 and the core network (CN) may be referred to as NG, and an interface between base station 1830 and neighbor base station 1840 may be referred to as 18n.

The base station 1830 may be divided into the CU and the DU. In other words, the base station 1830 may be operated with hierarchical separation. The CU may be connected to one or more DUs, and for example, an interface between the CU and the DU may be referred to as F1. The CU may perform a function of an upper layer of a base station, and the DU may perform a function of a lower layer of a base station. For example, the CU may be a logical node hosting radio resource control (RRC), service data adaptation protocol (SDAP), and packet data convergence protocol (PDCP) layers of a base station (e.g., gNB), and the DU may be a logical node hosting radio link control (RLC), media access control (MAC), and physical (PHY) layers of a base station. Alternatively, the CU may be a logical node hosting RRC and PDCP layers of a base station (e.g., EN-gNB).

The operation of the DU may be partially controlled by the CU. One DU may support one or more cells. One cell may be supported by one DU. One DU may be connected to one CU, and by appropriate implementation, one DU may be connected to multiple CUs.

Meanwhile, a packet processing method according to an embodiment of the disclosure may be similarly applied in a base station. For example, the packet processing device may be included as at least a portion of a base station. In this case, a packet processing device may identify a packet based on the DRB ID instead of a session identifier.

In an example, each of a plurality of packets to be processed in a base station may include the DRB ID, and the DRB ID may be included in a packet header. The base station may process a packet for which the DRB ID is not identified using a core having a relatively smaller number of active DRBs compared to another core. The base station may process a packet for which the DRB ID is identified using a core that previously processed a packet having the corresponding DRB ID.

According to an embodiment of the disclosure, an electronic device may be configured to comprise a plurality of antennas, at least one antenna tuning circuit connected to at least one antenna among the plurality of antennas, an RF circuit connected to the at least one antenna tuning circuit, and at least one communication processor operatively connected to the RF circuit. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that an embodiment of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

The term "part" or "module" used in an embodiment of the disclosure may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

The term "in case" used in an embodiment of the disclosure may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for a packet processing device to process packets using a plurality of cores in a wireless communication system, the method comprising:
receiving a packet according to a heterogeneous protocol;
providing the packet to a first core included in the plurality of cores for processing based on a session identifier not being identified in a packet header; and
providing the packet to a second core included in the plurality of cores for processing based on the session identifier being identified in the packet header,
wherein the first core has a relatively smaller number of active protocol data unit (PDU) sessions compared to the second core among the plurality of cores, and the second core is identified by the session identifier among the plurality of cores.

2. The method of claim 1, wherein providing the packet to the second core for processing includes:
obtaining an identifier indicating the second core from a session-level table using an offset value and a length value corresponding to the session identifier; and
determining the second core by the identifier.

3. The method of claim 2, wherein obtaining the identifier indicating the second core includes obtaining an identifier mapped to a hash value obtained by applying the offset value and the length value to a predetermined hash function from the session-level table.

4. The method of claim 2, comprising providing the packet to the first core for processing in case that the identifier indicating the second core is not obtained from the session-level table using the offset value and the length value.

5. The method of claim 1, comprising providing the packet to the first core for processing in case that the second core is not identified by the session identifier among the plurality of cores.

6. The method of claim 1, comprising monitoring a number of active PDU sessions for each of the plurality of cores, wherein the number of active PDU sessions is identified by periodic polling for a corresponding core or by a change notification of an active PDU session count received from a session management function (SMF).

7. A method for a packet processing device to process traffic using a plurality of cores in a wireless communication system, the method comprising:
identifying received traffic by protocol;
obtaining field information for identifying a PDU session by protocol based on header parsing for the traffic;
allocating the received traffic to a core associated with the field information in case that a core associated with the field information is identified in a session-level table; and
allocating the received traffic to a core having a relatively small number of active PDU sessions among the plurality of cores in case that a core associated with the field information is not identified in the session-level table.

8. The method of claim 7, wherein the field information includes an offset value and a length value of a field for identifying the PDU session.

9. The method of claim 7, wherein the session-level table includes a hash value determined from the field information and core information indicating a core to which traffic having the hash value was previously allocated.

10. The method of claim 7, comprising monitoring a number of active PDU sessions for each of the plurality of cores, wherein the number of active PDU sessions is identified by periodic polling for the plurality of cores or by a change notification of an active PDU session count received from a session management function (SMF).

11. A device for distributed processing of packets in a wireless communication system, comprising:
a buffer configured to store a plurality of packets; and
at least one packet processing device including a plurality of cores corresponding to a multi-core structure and configured to distributedly process a first packet and a second packet included in the plurality of packets by the plurality of cores,
wherein the first packet does not include a session identification field in a header region,
wherein the second packet includes a session identification field in a header region,
wherein the first packet is processed by a first core having a relatively smaller number of active PDU sessions compared to other cores among the plurality of cores,
wherein the second packet is processed by a second core determined by session identification information of the session identification field included in the header region of the second packet among the plurality of cores, and
wherein the first packet is received according to a different protocol from the second packet.

12. The device of claim 11, wherein the at least one packet processing device is configured to process a third packet at the first core in response to no core being associated with session identification information of a session identification field included in a header region of the third packet included in the plurality of packets.

13. The device of claim 11, wherein the at least one packet processing device is configured to:
extract a session identifier using an offset value and a length value corresponding to session identification information of the session identification field included in the header region of the second packet; and
obtain a core identifier indicating the second core based on the extracted session identifier in a session-level table.

14. The device of claim 13, wherein the session identifier is obtained by applying the offset value and the length value to a predetermined hash function.

15. The device of claim 11, comprising monitoring a number of active PDU sessions for each of the plurality of cores, wherein the number of active PDU sessions is identified by periodic polling for a corresponding core or by a change notification of an active PDU session count received from a session management function (SMF).
